(19) Europäisches Patentamt
European Patent Office
Office européen des brevets

(11) **EP 4 261 589 A1**

(12) **EUROPEAN PATENT APPLICATION**
published in accordance with Art. 153(4) EPC

(43) Date of publication:
**18.10.2023 Bulletin 2023/42**

(21) Application number: **21903901.3**

(22) Date of filing: **10.12.2021**

(51) International Patent Classification (IPC):
**G02B 13/00** (2006.01)    **G02B 9/60** (2006.01)
**G02B 3/00** (2006.01)    **G03B 17/12** (2021.01)
**H04N 5/225** (2006.01)

(52) Cooperative Patent Classification (CPC):
**G02B 3/00; G02B 9/60; G02B 13/00; G03B 17/12;
H04N 23/00**

(86) International application number:
**PCT/KR2021/018768**

(87) International publication number:
**WO 2022/124856 (16.06.2022 Gazette 2022/24)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **10.12.2020 KR 20200172497**

(71) Applicant: **LG Innotek Co., Ltd.**
**Seoul 07796 (KR)**

(72) Inventor: **MOON, Sung Min**
**Seoul 07796 (KR)**

(74) Representative: **M. Zardi & Co S.A.**
**Via G. B. Pioda, 6**
**6900 Lugano (CH)**

(54) **OPTICAL SYSTEM AND CAMERA MODULE INCLUDING SAME**

(57)    An optical system disclosed to an embodiment includes first to fifth lenses sequentially arranged along an optical axis from an object side to an image side, wherein the first lens has a positive refractive power, the second lens has a positive refractive power, each of the first to fifth lenses includes an object-side surface and an image-side surface, at least one of an image-side surface of the first lens, and the object-side surfaces and the image-side surfaces of the second to fifth lenses may have a larger clear aperture than a clear aperture of the object-side surface of the first lens.

FIG. 1

EP 4 261 589 A1

**Description**

[Technical Field]

An embodiment relates to an optical system for improved optical efficiency and a camera module including the same.

[Background Art]

The camera module captures an object and stores it as an image or video, and is installed in various applications. In particular, the camera module is produced in a very small size and is applied to not only portable devices such as smartphones, tablet PCs, and laptops, but also drones and vehicles to provide various functions. For example, the optical system of the camera module may include an imaging lens for forming an image, and an image sensor for converting the formed image into an electrical signal. In this case, the camera module may perform an autofocus (AF) function of aligning the focal lengths of the lenses by automatically adjusting the distance between the image sensor and the imaging lens, and may perform a zooning function of zooming up or zooning out by increasing or decreasing the magnification of a remote object through a zoom lens. In addition, the camera module employs an image stabilization (IS) technology to correct or prevent image stabilization due to an unstable fixing device or a camera movement caused by a user's movement. The most important element for this camera module to obtain an image is an imaging lens that forms an image side. Recently, interest in high efficiency such as high image quality and high resolution is increasing, and research on an optical system including plurality of lenses is being conducted in order to realize this. For example, research using a plurality of imaging lenses having positive (+) and/or negative (-) refractive power to implement a high-efficiency optical system is being conducted. However, when a plurality of lenses is included, there is a problem in that it is difficult to derive excellent optical properties and aberration properties.

In general, an optical system including a plurality of lenses may have a set effective focal length (EFL). In this case, when the EFL value is relatively large, the lens closest to the object side has a large aperture or has the largest aperture among the plurality of lenses. Accordingly, since the lens closest to the object side has a relatively large size, it is difficult to miniaturize the optical system. An optical system including a plurality of lenses may have a relatively high height. For example, as the number of lenses increases, the distance from the image sensor to the object surface of the lens closest to the object may increase. Accordingly, the overall thickness of a device, such as a smart phone, in which the optical system is disposed may increase, and there is a problem in that it is difficult to reduce the size. Accordingly, a new optical system capable of solving the above problems is required.

[Disclosure]

[Technical Problem]

The embodiment provides an optical system with improved optical properties. In addition, the embodiment provides an optical system that may be implemented in a small and compact. In addition, the embodiment provides an optical system applicable to a folded camera having a thin thickness.

[Technical Solution]

An optical system according to an embodiment of the invention comprises first to fifth lenses sequentially arranged along an optical axis from an object side to an image side, wherein the first lens has a positive refractive power, the second lens has a positive refractive power, each of the first to fifth lenses includes an object-side surface and an image-side surface, and at least one of the image-side surface of the first lens, the object-side surfaces and the image-side surfaces of the second to fifth lenses may have a larger a clear aperture than a clear aperture of the object-side surface of the first lens.

According to an embodiment of the invention, wherein a size of the clear aperture of the image-side surface of the first lens may be larger than a size of the clear aperture of the object-side surface of the first lens. An object-side surface of the first lens may be concave.

According to an embodiment of the invention, the first lens may satisfy the following Equation 1:

$$[\text{Equation 1}]\ 0.95 < L1S1\_CA / L1S2\_CA < 1$$

(In Equation 1, L1S1_CA means the size of the clear aperture of the obj ect-side surface of the first lens, and L1S2_CA means the size of the clear aperture of the image side of the first lens.

According to an embodiment of the invention, an effective focal length of the optical system may satisfy the following Equation 2:

$$[\text{Equation 2}]\ 7 < EFL < 40$$

(EFL in Equation 2 means an effective focal length of the optical system).

According to an embodiment of the invention, the first and second lenses may satisfy the following Equation 3:

$$[\text{Equation 3}]\ 0.1 < L1\_CT / L2\_CT < 0.75$$

(In Equation 3, L1_CT means a center thickness of the first lens, and L2_CT means a center thickness of the second lens).

According to an embodiment of the invention, F-number of the optical system may be less than 3.

According to an embodiment of the invention, the optical system further comprises a light path changing member disposed between the object and the first to fifth lenses, wherein the light path changing member may change a path of the light incident to the light path changing member in a first direction to a second direction that is an arrangement direction of the first to fifth lenses.

An optical system according to an embodiment of the invention includes first to fifth lenses sequentially arranged along an optical axis from an object side to an image side, the first lens has a positive refractive power, the second lens has a positive refractive power, the first lens may have a meniscus shape convex toward the image side, an object-side surface of the second lens may be convex, and at least one of the first to fifth lenses may have a non-circular shape.

According to an embodiment of the invention, each of the first to fifth lenses includes an object-side surface and an image-side surface, and at least one of an image-side surface of the first lens, and object-side surfaces and image-side surfaces of the second to fifth lenses may have a larger clear aperture than a clear aperture of the object-side surface of the first lens.

According to an embodiment of the invention, the object-side surface of the first lens may have a non-circular shape, and Equation 4 below may be satisfied:

$$[\text{Equation 4}]\ 0.52 < L1S1\_CH / L1S1\_CA < 0.98$$

(In Equation 4, L1S1_CA means the maximum size of the clear aperture (CA) of the first lens, and L1S1_CH means the minimum size of a clear aperture of the first lens according to the non-circular shape.

According to an embodiment of the invention, the image-side surface of the first lens and the object-side surface of the second lens may have a non-circular shape.

[Advantageous Effects]

The optical system and the camera module according to the embodiment may have improved optical properties. In detail, the optical system may include a plurality of lenses and may include at least one lens surface having a clear aperture larger than that of an object-side surface of the first lens closest to the object side. Accordingly, it is possible to have improved optical properties when designing an optical system including the plurality of lenses. The optical system and the camera module according to the embodiment may be provided in a slim form. For example, in the optical system, a lens having a relatively large clear aperture, for example, a lens surface of at least one lens adjacent to the object side may have a non-circular shape, for example, a D-cut shape. Accordingly, the overall height of the optical system may be reduced, and a camera module and device including the optical system may be provided in a slimmer shape.

The optical system according to the embodiment may change light incident in a direction perpendicular to a surface of a device or device to which it is applied, including the light path changing member, in a direction parallel to the surface of the device or apparatus. Accordingly, the optical system including the plurality of lenses may have a thinner thickness in the device or apparatus, and the overall thickness of the device or apparatus may be thinner.

[Description of Drawings]

FIGS. 1 and 2 are block diagrams of an optical system according to an embodiment.

FIG. 3 is a view for explaining a non-circular shape of the lenses of the optical system according to the embodiment.

FIGS. 4 to 7 are graphs illustrating an aberration diagram, a diffraction MTF characteristic, a chromatic aberration characteristic, and a coma aberration characteristic of an optical system according to an embodiment.

FIG. 8 is a diagram illustrating that a camera module according to an embodiment is applied to a mobile terminal.

[Best Mode]

Hereinafter, preferred embodiments of the invention will be described in detail with reference to the accompanying drawings. A technical spirit of the invention is not limited to some embodiments to be described, and may be implemented in various other forms, and one or more of the components may be selectively combined and substituted for use within the scope of the technical spirit of the invention. In addition, the terms (including technical and scientific terms) used in the embodiments of the invention, unless specifically defined and described explicitly, may be interpreted in a meaning that may be generally understood by those having ordinary skill in the art to which the invention pertains, and terms that are commonly used such as terms defined in a dictionary should be able to interpret their meanings in consideration of the contextual meaning of the relevant technology. Further, the terms used in the embodiments of the invention are for explaining the embodiments and are not intended to limit the invention. In this specification, the singular forms also may include plural forms unless otherwise specifically stated in a phrase, and in the case in which at least one (or one or more) of A and (and) B, C is stated, it may include one or more of all combinations that may be combined with A, B, and C. In describing the components of the embodiments of the invention, terms such as first, second, A, B, (a), and (b) may be used. Such terms are only for distinguishing the component from other component, and may not be determined by the term by the nature, sequence or procedure etc. of the corresponding constituent element. And when it is described that a component is "connected ", "coupled" or "joined" to another component, the description may include not only being directly connected, coupled or joined to the other component but also being "connected ", "coupled" or "joined" by another component between the component and the other component. In addition, in the case of being described as being formed or disposed "above (on)" or "below (under)" of each component, the description includes not only when two components are in direct contact with each other, but also when one or more other components are formed or disposed between the two components. In addition, when expressed as "above (on)" or "below (under)", it may refer to a downward direction as well as an upward direction with respect to one element.

The convex surface of the lens may mean that the lens surface of the region corresponding to the optical axis has a convex shape, and the concave lens surface means that the lens surface of the region corresponding to the optical axis has a concave shape. In addition, "object-side surface" may mean the surface of the lens facing the object side with respect to the optical axis, and "image-side surface" may mean the surface of the lens toward the imaging surface with respect to the optical axis. In addition, the vertical direction may mean a direction perpendicular to the optical axis, and the end of the lens or the lens surface may mean the end of the effective region of the lens through which the incident light passes.

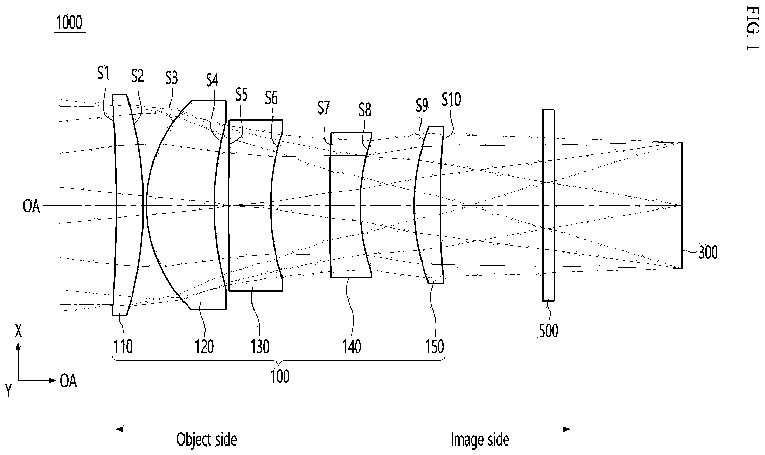

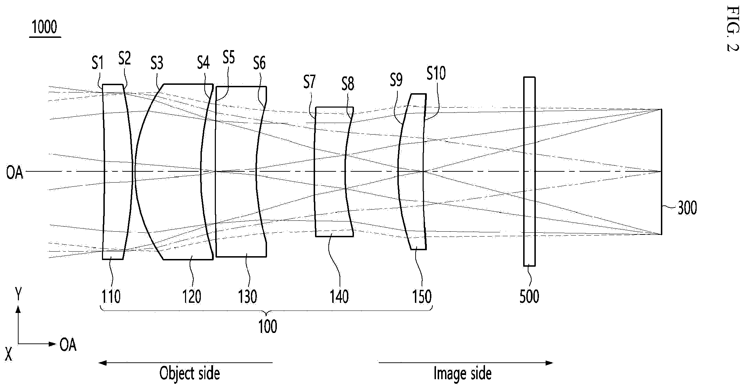

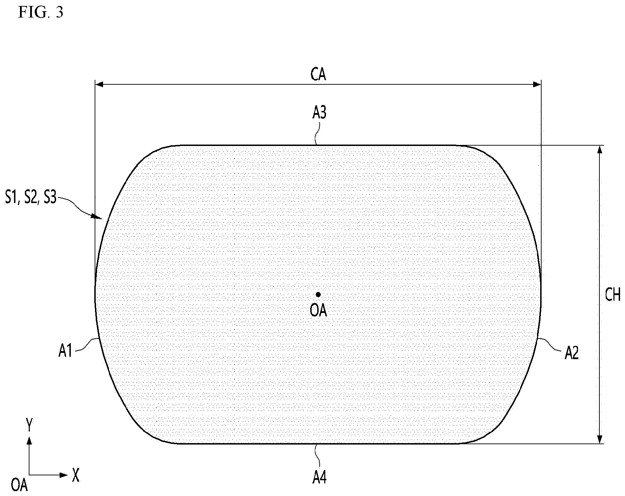

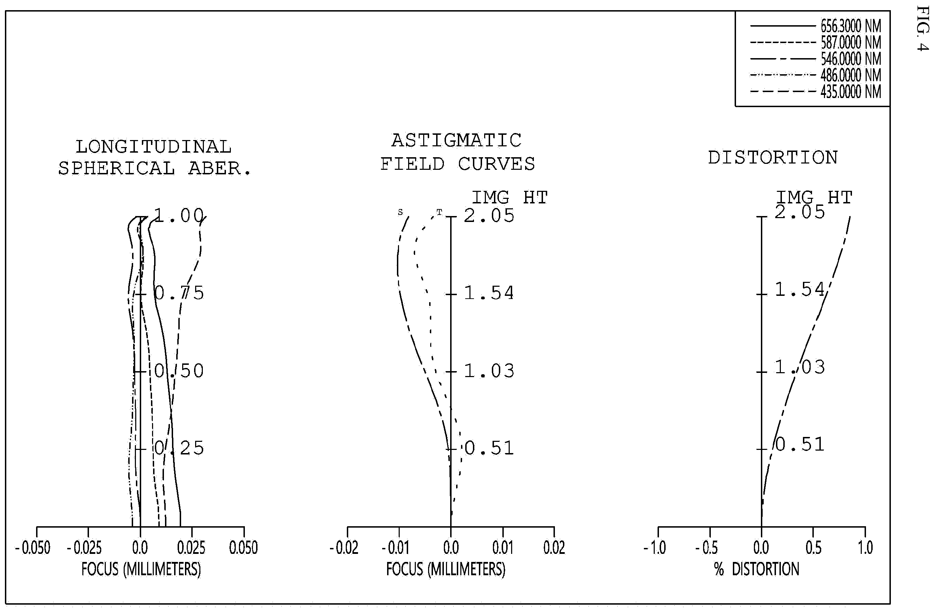

FIGS. 1 and 2 are diagrams of an optical system according to an embodiment, and FIG. 3 is a diagram for explaining a non-circular shape lens among lenses of the optical system according to the embodiment. FIGS. 4 to 7 are graphs illustrating an aberration diagram, a diffraction MTF characteristic, a chromatic aberration characteristic, and a coma aberration characteristic of an optical system according to an embodiment.

Referring to FIGS. 1 to 7, the optical system 1000 according to the embodiment may include a plurality of lenses 100. For example, the plurality of lenses 100 may include three or more lenses. In detail, the plurality of lenses 100 may include four or more lenses. In more detail, the plurality of lenses 100 may include five or more lenses. The optical system 1000 may include a first lens 110, a second lens 120, a third lens 130, a fourth lens 140, a fifth lens 150 and an image sensor 300. The first to fifth lenses 110, 120, 130, 140, and 150 may be sequentially disposed along the optical axis OA of the optical system 1000. The light corresponding to the object information may be incident on the image sensor 300 passing through the first lens 110, the second lens 120, the third lens 130, the fourth lens 140, and the fifth lens 150.

Each of the plurality of lenses 100 may include an effective region and an ineffective region. The effective region may be a region through which light incident on each of the first to fifth lenses 110, 120, 130, 140 and 150 passes. That is, the effective region may be a region in which incident light is refracted to realize optical properties. The ineffective region may be disposed around the effective region. The ineffective region may be a region to which the light is not incident. That is, the ineffective region may be a region independent of the optical characteristic. Also, the ineffective region may be a region fixed to a barrel (not shown) for accommodating the lens.

The image sensor 300 may detect light. In detail, the image sensor 300 may detect light sequentially passing through the plurality of lenses 100, in detail, the first to fifth lenses 110, 120, 130, 140 and 150. The image sensor 300 may include a charge coupled device (CCD) or a complementary metal oxide semiconductor (CMOS). The optical system 1000 according to the embodiment may further include a filter 500. The filter 500 may be disposed between the plurality of lenses 100 and the image sensor 300. The filter 500 may be disposed between the image sensor 300 and the last lens (fifth lens 150) closest to the image sensor 300 among the plurality of lenses 100. The filter 500 may include at least one of an infrared filter and an optical filter such as a cover glass. The filter 500 may pass light of a set wavelength band and filter light of a different wavelength band. When the filter 500 includes an infrared filter, radiant heat emitted from external light may be blocked from being transmitted to the image sensor 300. Also, the filter 500 may transmit visible light and reflect infrared light.

The optical system 1000 according to the embodiment may include an aperture stop (not shown). The aperture stop may control the amount of light incident on the optical system 1000. The aperture stop may be located in front of the first lens 110 or between two lenses selected from among the first to fifth lenses 110, 120, 130, 140 and 150. For example, the aperture stop may be disposed between the second lens 120 and the third lens 130. In addition, at least one of the first to fifth lenses 110, 120, 130, 140 and 150 may serve as an aperture stop. For example, an object-side surface or an image-side surface of one lens selected from among the first to fifth lenses 110, 120, 130, 140 and 150 may serve as an aperture stop for controlling the amount of light. For example, the object-side surface (fifth surface S5) of the third lens 130 may serve as an aperture stop.

The optical system 1000 according to the embodiment may further include a light path changing member (not shown). The light path changing member may change the path of the light by reflecting the light incident from the outside. The light path changing member may include a reflector and a prism. For example, the light path changing member may include a right-angle prism. When the light path changing member includes a right-angle prism, the light path changing member may change the path of the light by reflecting the path of the incident light at an angle of 90 degrees. The light path changing member may be disposed closer to the object side than the plurality of lenses 100. That is, when the optical system 1000 includes the optical path changing member, in a direction from the object side to the image side, the optical path changing member, the first lens 110, the second lens 120, and the third lens 130, the fourth lens 140, the fifth lens 150, the filter 500, and the image sensor 300 may be disposed in this order. The light path changing member may reflect light incident from the outside to change the path of the light in a set direction. For example, the light path changing member may change a path of the light incident on the light path changing member in a first direction to the second direction (a direction spaced apart from the plurality of lenses, and an OA direction in FIGS. 1 and 2) that is an arrangement direction of the plurality of lenses 100. When the optical system 1000 includes a light path changing member, the optical system may be applied to a folded camera capable of reducing the thickness of the camera. In detail, when the optical system 1000 includes the light path changing member, light incident in a direction perpendicular to the surface of the applied device may be changed in a direction parallel to the surface of the device. Accordingly, the optical system 1000 including the plurality of lenses may have a thinner thickness in the device, and thus the device may be provided thinner. In more detail, when the optical system 1000 does not include the light path changing member, the plurality of lenses 100 may be disposed to extend in a direction perpendicular to the surface of the device in the device. Accordingly, the optical system 1000 including the plurality of lenses 100 may have a high height in a direction perpendicular to the surface of the device, and it may be difficult to form a thin thickness of the device.

However, when the optical system 1000 includes the light path changing member, it may be applied to a folded camera, and the plurality of lenses may be arranged to extend in a direction parallel to the surface of the device. That is, the optical system 1000 may be disposed such that the optical axis OA is parallel to the surface of the device. Accordingly, the optical system 1000 including the plurality of lenses may have a low height in a direction perpendicular to the surface of the device. Accordingly, the folded camera including the optical system 1000 may have a thin thickness in the device, and the thickness of the device may also be reduced.

Hereinafter, the plurality of lenses 100 according to the embodiment will be described in more detail. The optical system 1000 may include a first lens 110, a second lens 120, a third lens 130, and a fourth lens 140, a fifth lens 150, a filter 500, and an image sensor 300 sequentially arranged along the optical axis OA from the object side toward the image side or the sensor side. In detail, the first lens 110 may be disposed closest to the object side among the plurality of lenses 100, and the fifth lens 150 may be disposed closest to the image (image sensor 300) side.

The first lens 110 may have positive (+) refractive power. The first lens 110 may include a plastic or glass material. For example, the first lens 110 may be made of a plastic material.

The first lens 110 may include a first surface S1 defined as an object-side surface and a second surface S2 defined as an image-side surface. The first surface S1 may be concave, and the second surface S2 may be convex. That is, the first lens 110 may have a meniscus shape convex in the image side direction. Hereinafter, the image side may be a sensor side, and the image-side surface may be a sensor-side surface. At least one of the first surface S1 and the second surface S2 may be an aspherical surface. For example, both the first surface S1 and the second surface S2 may be aspherical.

The second lens 120 may have positive (+) refractive power. The second lens 120 may include a plastic or glass material. For example, the second lens 120 may be made of a plastic material. The second lens 120 may include a third surface S3 defined as an object-side surface and a fourth surface S4 defined as an image-side surface. The third surface S3 may be convex, and the fourth surface S4 may be concave. That is, the second lens 120 may have a meniscus shape convex toward the object side. At least one of the third surface S3 and the fourth surface S4 may be an aspherical surface. For example, both the third surface S3 and the fourth surface S4 may be aspherical.

The third lens 130 may have negative (-) refractive power. The third lens 130 may include a plastic or glass material. For example, the third lens 130 may be made of a plastic material. The third lens 130 may include a fifth surface S5 defined as an object-side surface and a sixth surface S6 defined as an image-side surface. The fifth surface S5 may be concave, and the sixth surface S6 may be concave. That is, the third lens 130 may have a shape in which both surfaces are concave. At least one of the fifth surface S5 and the sixth surface S6 may be an aspherical surface. For example, both the fifth surface S5 and the sixth surface S6 may be aspherical. The third lens 130 may include at least one inflection point. In detail, at least one of the fifth surface S5 and the sixth surface S6 may include an inflection point. For example, the fifth surface S5 may include a first inflection point (not shown) defined as an inflection point. The first inflection point may be disposed at a position less than or equal to about 40% when the optical axis OA as a starting point and the end of the fifth surface S5 of the third lens 130 as an end point. In detail, the first inflection point may be disposed at a position of about 10% to about 40% when the optical axis OA is the starting point and an end of the fifth surface S5 of the third lens 130 is an end point. In more detail, the first inflection point may be at a position of about 15% to about 35% when the optical axis OA is the starting point and the end of the fifth surface S5 of the third lens 130 is the end point. Here, the end of the fifth surface S5 may mean an end of the effective region of the fifth surface S5 of the third lens 130, and the position of the first inflection point may be a position set based on a vertical direction of the optical axis OA.

The fourth lens 140 may have negative (-) refractive power. The fourth lens 140 may include a plastic or glass material. For example, the fourth lens 140 may be made of a plastic material. The fourth lens 140 may include a seventh surface S7 defined as an object-side surface and an eighth surface S8 defined as an image-side surface. The seventh surface S7 may be convex, and the eighth surface S8 may be concave. That is, the fourth lens 140 may have a meniscus shape convex toward the object side. At least one of the seventh surface S7 and the eighth surface S8 may be an aspherical surface. For example, both the seventh surface S7 and the eighth surface S8 may be aspherical.

The fifth lens 150 may have positive (+) refractive power. The fifth lens 150 may include a plastic or glass material. For example, the fifth lens 150 may be made of a plastic material. The fifth lens 150 may include a ninth surface S9 defined as an object-side surface and a tenth surface S10 defined as an image-side surface. The ninth surface S9 may be convex, and the tenth surface S10 may be concave. That is, the fifth lens 150 may have a meniscus shape convex toward the object side. At least one of the ninth surface S9 and the tenth surface S10 may be an aspherical surface. For example, both the ninth surface S9 and the tenth surface S10 may be aspherical.

Also, the optical system 1000 may include an aperture stop (not shown). The aperture stop may be disposed between the object and the first lens 110 or between the second and third lenses 120 and 130. For example, the object-side surface (fifth surface S5) of the third lens 130 may serve as an aperture stop.

The first to fifth lenses 110, 120, 130, 140, and 150 may have a set clear aperture. For example, each of the first to tenth surfaces S1, S2, S3, S4, S5, S6, S7, S8, S9, and S10 may have a set clear aperture size. At this time, the object-side surface or the image-side surface of one selected from the first lens 110 and the second lens 120 may have the largest clear aperture among the first to tenth surfaces S1, S2, S3, S4, S5, S6, S7, S8, S9, and S10 of the first to fifth lenses 110, 120, 130, 140, and 150. For example, the optical system 1000 may include at least one lens surface having a larger clear aperture than the object-side surface (first surface S1) of the first lens 110. In detail, the optical system 1000 may include one lens surface having a larger clear aperture than the first surface S1. That is, at least one of the second to tenth surfaces S2, S3, S4, S5, S6, S7, S8, S9, and S10 may have a larger clear aperture than the first surface S1.

The size of the clear aperture of the image-side surface (second surface S2) of the first lens 110 may be larger than the size of the clear aperture of the object-side surface (first surface S1) of the first lens 110. The clear aperture of the second surface S2 may be the largest among the first to tenth surfaces S1, S2, S3, S4, S5, S6, S7, S8, S9, and S10. In addition, the size of the clear aperture of the first surface S1 may be large next to a size that of the the second surface S2 of the first to tenth surfaces S1, S2, S3, S4, S5, S6, S7, S8, S9, and S10.

The size of the clear aperture of the second lens 120 may be smaller than the size of the clear aperture of the first lens 110. For example, the object-side surface (third surface S3) and the image-side surface (fourth surface S4) of the second lens 120 may have a smaller clear aperture than that of the object-side surface (first surface S1) and the image-side surface (second surface S2) of the first lens 110. The size of the clear aperture of the third surface S3 may be large next to a size that of the first surface S1 among the first to tenth surfaces S1, S2, S3, S4, S5, S6, S7, S8, S9, S10. In addition, the size of the clear aperture of the fourth surface S4 may be large next to a size that of the third surface S3 among the first to tenth surfaces S1, S2, S3, S4, S5, S6, S7, S8, S9, and S10.

At least one of the first to fifth lenses 110, 120, 130, 140 and 150 may have a non-circular shape. For example, the first lens 110 and the second lens 120 may have a non-circular shape. In detail, the first surface S1, the second surface S2, and the third surface S3 may have a non-circular shape, and the fourth to tenth surfaces S4, S5, S6, S7, S8, S9, and S10 may have a circular shape. That is, when each of the first to third surfaces S1, S2, and S3 is viewed from the front corresponding to the optical axis OA, the effective region of each lens surface may have a non-circular shape.

Referring to FIG. 3, the effective region of each of the first surface S1, the second surface S2 and the third surface S3 may include first to fourth edges A1, A2, A3, and A4. The first edge A1 and the second edge A2 may be edges facing in a first direction (x-axis direction) perpendicular to the optical axis OA. The first edge A1 and the second edge A2 may have a curved shape. The first edge A1 and the second edge A2 may be provided in a curved shape having the same length and curvature. That is, the first edge A1 and the second edge A2 may have a symmetrical shape based on an virtual line passing through the optical axis OA and extending in the second direction (y-axis direction). The third edge A3 and the fourth edge A4 may be edges facing the optical axis OA and a second direction (y-axis direction) perpendicular to the first direction. The third edge A3 and the fourth edge A4 may be edges connecting ends of the first edge A1 and the second edge A2. The third edge A3 and the fourth edge A4 may have a straight line shape. The third edge A3 and the fourth edge A4 may have the same length and may be parallel to each other. That is, the third edge A3 and the fourth edge A4 may have a symmetrical shape based on an virtual line passing through the optical axis OA and extending in the first direction (x-axis direction). The first surface S1, the second surface S2 and the third surface S3 have a non-circular shape, for example, and may have a D-cut shape, by including the first to fourth edges A1, A2, A3, and A4 described above. The first surface S1, the second surface S2, and the third surface S3 may have the non-circular shape described above in the process of manufacturing the first lens 110 and the second lens 120. For example, when the first and second lenses 110 and 120 include a plastic material, they may be manufactured in the above-described non-circular shape during the injection process. Alternatively, the first lens 110 and the second lens 120 may be manufactured in a circular shape through an injection process, and in the subsequent cutting process, the first surface S1 and the second surface S2 and a portion of the third surface S3 may be cut to have the third edge A3 and the fourth edge A4.

Accordingly, the effective region of each of the first surface S1, the second surface S2, and the third surface S3 may have a set size. For example, a length CA (clear aperture) of a first virtual straight line passing through the optical axis OA and connecting the first edge A1 and the second edge A2 may be longer than a length CH (clear height) of a second virtual straight line passing through the optical axis OA and connecting the third edge A3 and the fourth edge A4. Here, the length CA of the first straight line may mean the maximum clear aperture CA of each of the first to third surfaces S1, S2, and S3, and the length CH of the second straight line may mean a minimum clear height (CH) of a clear aperture of each of the first to third surfaces S1, S2, and S3. In the above description, although it has been described that the effective regions of the first to third surfaces S1, S2 and S3 have a non-circular shape, the invention is not limited thereto, and the first to third surfaces S1, S2 and S3 are not limited thereto. Each of the effective regions may have a circular shape, and each of the ineffective regions of the first to third surfaces S1, S2 and S3 may have a non-circular shape.

The optical system 1000 according to the embodiment may satisfy at least one of the following equations. Accordingly, the optical system 1000 according to the embodiment may have improved optical properties. In addition, when the optical system 1000 satisfies at least one of Equations to be described later, it may be implemented in a smaller and more compact manner. In addition, when the optical system 1000 satisfies at least one of the following equations, it is applicable to a folded camera module having a thinner thickness, and a device including the camera module may have a thinner thickness.

[Equation 1]

$$0.9 < L1S1\_CA / L1S2\_CA < 1$$

In Equation 1, L1S1_CA means the clear aperture (CA) of an object-side surface (first surface S1) of the first lens 110, and L1S2_CA means the clear aperture (CA) of the image-side surface (second surface S2) of the first lens 110.

[Equation 2]

$$1 < L1S1\_CA / L2S1\_CA < 1.2$$

In Equation 2, L1S1_CA means a clear aperture (CA) of an object-side surface (first surface S 1) of the first lens 110, and L2S1_CA means a clear aperture (CA) of an object-side surface (third surface S3) of the second lens 120.

[Equation 3]

$$1 < L1S1\_CA / L2S2\_CA < 1.35$$

In Equation 3, L1S1_CA means a clear aperture (CA) of an object-side surface (first surface S 1) of the first lens 110, and L2S2_CA means the clear aperture (CA) of the image-side surface (fourth surface S4) of the second lens 120.

[Equation 4]

$$7 < EFL < 40$$

In Equation 4, EFL means an effective focal length of the optical system 1000. In detail, [Equation 4] may satisfy the following condition: 8 < EFL < 30, in consideration of the improvement of optical properties. In more detail, [Equation 4] may satisfy the following condition: 9 < EFL < 26.

[Equation 5]

$$6.5 < L1R1 / L1R2 < 8.5$$

In Equation 4, L1R1 means the radius of curvature of the object-side surface (first surface S1) of the first lens 110, and L1R2 means the radius of curvature of the image-side surface(second surface S2) of the first lens 110.

[Equation 6]

$$-20 < L1R1 / L2R1 < -15$$

In Equation 5, L1R1 means the radius of curvature of the object-side surface (first surface S 1) of the first lens 110, and L2R1 means the radius of curvature of the object-side surface (third surface (third surface S3) of the second lens 120.

[Equation 7]

$$-3 < L1R2 / L2R1 < -1$$

In Equation 7, L1R2 means the radius of curvature of the image-side surface (second surface S2) of the first lens 110, and L2R1 means the radius of curvature of the object-side surface (third surface S3) of the second lens 120).

[Equation 8]

$$0.1 < L1R1 / L3R1 < 0.8$$

In Equation 8, L1R1 means the radius of curvature of the object-side surface (first surface S1) of the first lens 110, and L3R1 means the radius of curvature of the object-side surface (fifth surface S5) of the third lens 130. In detail, in [Equation 8], the following condition: 0.1 < L1R1 / L3R1 < 0.7 may be satisfied in consideration of optical characteristic improvement. In more detail, [Equation 8] may satisfy the following condition: 0.1 < L1R1 / L3R1 < 0.6.

[Equation 9]

$$-130 < L3R1 / L2R1 < -110$$

In Equation 9, L2R1 means the radius of curvature of the object-side surface (third surface S3) of the second lens 120, and L3R1 means the radius of curvature of the object-side surface (fifth surface S5) of the third lens 130.

[Equation 10]

$$0.1 < L1\_CT / L2\_CT < 0.75$$

In Equation 10, L1_CT means a center thickness of the first lens 110, and L2_CT means a center thickness of the second lens 120. In detail, [Equation 10] may satisfy the following condition: 0.2 < L1_CT < L2_CT < 0.65, in consideration of optical characteristic improvement. In more detail, Equation 10 may satisfy the following condition: 0.3 < L1_CT < L2_CT < 0.55.

[Equation 11]

$$0.5 < L1\_CT / L3\_CT < 0.9$$

In Equation 11, L1_CT means a center thickness of the first lens 110, and L3_CT means a center thickness of the third lens 130.

[Equation 12]

$$0.1 < d12 / d23 < 0.4$$

In Equation 12, d12 means a center interval between the first lens 110 and the second lens 120, and d23 means a center interval between the second lens 120 and the third lens 130.

[Equation 13]

$$20 < d34 / d12 < 30$$

In Equation 13, d34 means a center interval between the third lens 130 and the fourth lens 140, and d12 means a center interval between the first lens 110 and the second lens 120.

[Equation 14]

$$3.5 < d34 / d23 < 7$$

In Equation 14, d34 means a center interval between the third lens 130 and the fourth lens 140, and d23 means a center interval between the second lens 120 and the third lens 130.

[Equation 15]

$$0.5 < d34 / d45 < 2$$

In Equation 15, d34 means a center interval between the third lens 130 and the fourth lens 140, and d45 means a center interval between the fourth lens 140 and the fifth lens 150.

[Equation 16]

$$5 < L1\_CT / d12 < 15$$

In Equation 16, L1_CT means a center thickness of the first lens 110, and d12 means a center interval between the first lens 110 and the second lens 120.

[Equation 17]

$$20 < L2\_CT / d12 < 30$$

In Equation 17, L2_CT means a center thickness of the second lens 120, and d12 means a center interval between the first lens 110 and the second lens 120.

[Equation 18]

$$1 < f1/f2 < 2$$

In Equation 18, f1 means a focal length of the first lens 110, and f2 means a focal length of the second lens 120.

[Equation 19]

$$1 < f1/TTL < 1.8$$

In Equation 19, f1 means a focal length of the first lens 110, and TTL (Total Track Length) means a distance in the direction of the optical axis OA from the apex of the object-side surface (first surface S1) of the first lens 110 to the upper surface of the image sensor 300.

[Equation 20]

$$0.5 < f2 / TTL < 1.2$$

In Equation 20, f2 means a focal length of the second lens 120, and TTL (Total Track Length) a distance in the direction of the optical axis OA from the apex of the object-side surface (first surface S 1) of the first lens 110 to the upper surface of the image sensor 300.

[Equation 21]

$$1 < TTL / bf2 < 1.2$$

In Equation 21, TTL (Total track length) a distance in the direction of the optical axis OA from the apex of the object-side surface (first surface S1) of the first lens 110 to the upper surface of the image sensor 300, bf2 means a distance in the optical axis OA direction from the apex of the object-side surface (third surface S3 ) of the second lens 120 to the upper surface of the image sensor 300.

[Equation 22]

$$0.52 < L1S1\_CH / L1S1\_CA < 0.98$$

In Equation 22, L1S1_CA means the maximum size CA of the clear aperture of the object-side surface (first surface S 1) of the first lens 110, and L1S1_CH means the minimum size (CH: clear height) of the clear aperture of the object-side surface (the first surface S 1). In detail, [Equation 22] may satisfy the following condition: 0.56 < L1S1_CH / L1S1_CA < 0.9, in order to provide the optical system 1000 more slim. In more detail, [Equation 22] may satisfy the following condition: 0.6 < L1S1_CH / L1S1_CA < 0.85.

[Equation 23]

$$0.52 < L1S2\_CH / L1S2\_CA < 0.98$$

In Equation 23, L1S2_CA means the maximum size CA of the clear aperture of the image-side surface (second surface S2) of the first lens 110, L1S2_CH means the minimum size CH (clear height) of the clear aperture of the image-side surface (second surface S2) of the first lens 110. In detail, [Equation 23] may satisfy the following condition: 0.56 < L1 S2_CH / L1S2_CA < 0.9, in order to provide the optical system 1000 more slim. In more detail, Equation 23 may satisfy the following condition: 0.6 < L1S2_CH/L1S2_CA < 0.85.

[Equation 24]

$$0.52 < L2S1\_CH / L2S1\_CA < 0.98$$

In Equation 24, L2S1_CA means the maximum size CA of the clear aperture of the object-side surface (third surface S3) of the second lens 120, and L2S1_CH means the minimum size CH (clear height) of the clear aperture of the object-side surface (third surface S3). In detail, [Equation 24] may satisfy the following condition: 0.56 < L2S1_CH / L2S1_CA < 0.9, in order to provide the optical system 1000 more slim. In more detail, Equation 24 may satisfy the following condition: 0.6 < L2S1_CH / L2S1_CA < 0.85.

[Equation 25]

$$L1S2\_CA > L1S1\_CA > L2S1\_CA$$

In Equation 25, L1S1_CA means the maximum size CA of the clear aperture of the object-side surface (first surface S1) of the first lens 110, and L1S2_CA means the maximum size CA of the clear aperture of the image-side surface (second surface S2) of the first lens 110. In addition, L2S1_CA means the maximum size CA of the clear aperture of the object-side surface (third surface S3) of the second lens 120.

[Equation 26]

$$L1S1\_CH = L1S2\_CH = L2S1\_CH$$

In Equation 26, L1S1_CH means the minimum size CH (clear height) of the clear aperture of the object-side surface (first surface S1) of the first lens 110, and L1S2_CH means the minimum size CH (clear height) of the clear aperture of the image-side surface (second surface S2) of the first lens 110. In addition, L2S1_CH means the minimum size CH (clear height) of the clear aperture of the object-side surface (third surface S3) of the second lens 120.

[Equation 27]

$$1.4 < n1d < 1.6$$

In Equation 27, n1d means a refractive index index of the first lens 110.

[Equation 28]

$$1.4 < n2d < 1.6$$

In Equation 28, n2d means a refractive index of the second lens 120.

$$[\text{Equation 29}]$$

$$40 < V1d < 80$$

In Equation 29, V1d means an Abbe-number of the first lens 110.

$$[\text{Equation 30}]$$

$$40 < V2d < 80$$

In Equation 30, V2d means an Abbe-number of the second lens 120.

$$[\text{Equation 31}]$$

$$F\# < 3$$

In Equation 31, F# means F-number of the optical system 1000.

$$[\text{Equation 32}]$$

$$4 < TTL / ImgH < 6.5$$

In Equation 32, TTL (Total Track Length) means a distance in direction of the optical axis OA from the apex of the object-side surface (first surface S1) of the first lens 110 to the upper surface of the image sensor 300, ImgH means the vertical distance of the optical axis OA from the 0-field region, which is a center of the upper surface of the image sensor 300 overlapping the optical axis OA, to the 1.0 field region of the image sensor 300. That is, the ImgH means a value of 1/2 of the length in the diagonal direction of the effective region of the image sensor 300.

$$[\text{Equation 33}]$$

$$1 < BFL / ImgH < 3.5$$

In Equation 33, the back focal length (BFL) means the distance in direction of the optical axis OA from the apex of the image-side surface (tenth surface S10) of the fifth lens 150 to the upper surface of the image sensor 300, ImgH means the vertical distance of the optical axis OA from the 0-field region, which is a center of the upper surface of the image sensor 300 overlapping the optical axis OA, to the 1.0 field region of the image sensor 300. That is, the ImgH means a value of 1/2 of the length in the diagonal direction of the effective region of the image sensor 300.

$$[\text{Equation 34}]$$

$$1.5 < TTL / BFL < 3.5$$

In Equation 34, TTL (Total Track Length) means a distance in direction of the optical axis OA from the apex of the object-side surface (first surface S1) of the first lens 110 to the upper surface of the image sensor 300, the BFL (back focal length) means the distance in direction of the optical axis OA from the apex of the image-side surface (tenth surface S10) of the fifth lens 150 to the upper surface of the image sensor 300.

[Equation 35]

$$1 < EFL / TTL < 1.5$$

In Equation 35, EFL means an effective focal length of the optical system 1000, and TTL (total track length) means a distance in the direction of the optical axis OA from an apex of the object-side surface (first surface S 1) of the first lens 110 to the upper surface of the image sensor 300.

[Equation 36]

$$2 < EFL / BFL < 3$$

In Equation 36, EFL means an effective focal length of the optical system 1000, and BFL (back focal length) means the distance in direction of the optical axis OA from the apex of the image-side surface (tenth surface S10) of the fifth lens 150 to the upper surface of the image sensor 300.

[Equation 37]

$$2 < EFL / EPD < 4$$

In Equation 37, EFL means an effective focal length of the optical system 1000, and EPD means an entrance pupil size of the optical system 1000.

[Equation 38]

$$Z = \frac{cY^2}{1 + \sqrt{1 - (1 + K)c^2 Y^2}} + AY^4 + BY^6 + CY^8 + DY^{10} + EY^{12} + FY^{14} + \cdots$$

In Equation 38, Z is Sag, which may mean a distance in the optical axis direction from an arbitrary position on the aspherical surface to the vertex of the aspherical surface.

In addition, Y may mean a distance in a direction perpendicular to the optical axis from an arbitrary position on the aspherical surface to the optical axis.

Also, c may mean a curvature of the lens, and K may mean a conic constant.

In addition, A, B, C, D, E, and F may mean an aspheric constant.

The optical system 1000 according to the embodiment may satisfy at least one of Equations 1 to 37. In particular, the optical system 1000 may include at least one lens surface having a clear aperture larger than that of the first surface S1 and may have improved optical properties.

In addition, at least one of the plurality of lenses 100 of the optical system 1000 may have a non-circular shape, for example, a D-cut shape. In detail, the first lens 110 and the second lens 120 may have a non-circular shape. In more detail, the effective region of the first to third surfaces S1, S2, and S3 may have a non-circular shape, and an effective regions of the remaining surfaces S4, S5, S6, S7, S8, S9, and S10 may have a circular shape. Accordingly, the optical system 1000 may be implemented in a smaller size, and may be provided more compactly compared to an optical system in which all lenses have a circular shape.

In addition, as at least one surface of the optical system 1000 has the above-described non-circular shape, an effective region of the non-circular lens surface may decrease, and thus optical characteristics may be deteriorated. However, the optical system 1000 according to the embodiment may prevent or minimize performance degradation due to reduction in the effective region by satisfying at least one of Equations 1 to 37 described above.

Also, when the optical system 1000 satisfies at least one of Equations 1 to 37, it may be applicable to a folded camera. In detail, the optical system 1000 may change the light incident in a direction perpendicular to the surface of the device to which the light path changing member is applied in a direction parallel to the surface of the device. Accordingly, the optical system 1000 including the plurality of lenses may have a thinner thickness within the device, and the device may be provided with a thinner thickness.

[Table 1]

| Lens | Surface | Radius (mm) of curvature | Thickness(mm)/ Interval (mm) | Index | Abbe # |
|---|---|---|---|---|---|
| Lens 1 | S1 | -54.5900 | 0.5494 | 1.5368 | 55.676 2 |
| | S2 | -7.1533 | 0.0500 | | |
| Lens 2 | S3 | 2.8652 | 1.3000 | 1.5368 | 55.676 2 |
| | S4 | 5.8532 | 0.2812 | | |
| Lens 3 | S5(Stop) | -347.7532 | 0.8257 | 1.6580 | 21.484 7 |
| | S6 | 5.1670 | 1.1500 | | |
| Lens 4 | S7 | 28.7814 | 0.5860 | 1.5928 | 28.268 7 |
| | S8 | 4.2894 | 1.0500 | | |
| Lens 5 | S9 | 3.8192 | 0.5097 | 1.6206 | 25.949 3 |
| | S10 | 11.2228 | | | |

[Table 2]

| Lens | Surface | Maximum clear aperture (CA, mm) | Minimum clear aperture (CH, mm) |
|---|---|---|---|
| Lens 1 | S1 | 1.9500 | 1.6000 |
| | S2 | 1.9603 | 1.6000 |
| Lens 2 | S3 | 1.8493 | 1.6000 |
| | S4 | 1.5498 | - |
| Lens 3 | S5 | 1.5162 | - |
| | S6 | 1.3557 | - |
| Lens 4 | S7 | 1.2790 | - |
| | S8 | 1.2414 | - |
| Lens 5 | S9 | 1.4082 | - |
| | S10 | 1.4000 | - |

[Table 3]

| Item | Embodiment |
|---|---|
| EFL | 11.0808 mm |
| TTL | 11.0000 mm |
| BFL | 4.6979 mm |
| F# | 2.8412 |
| ImgH | 2.0510 mm |
| bf2 | 10.4006 mm |
| EPD | 3.9000 mm |
| f1 | 15.2734 mm |
| f2 | 9.0762 mm |
| f3 | -7.7303 mm |

(continued)

| Item | Embodiment |
|------|------------|
| f4 | -8.5793 mm |
| f5 | 9.0888 mm |

Table 1 shows the radius of curvature of the first to fifth lenses 110, 120, 130, 140 and 150 according to the embodiment, the center thickness (mm) of each lens, and the center interval (mm) between each of the lenses, refractive index, and Abbe's Number.

In addition, Table 2 shows the maximum clear aperture (CA) and the minimum clear aperture (CH) of the first to fifth lenses 110, 120, 130, 140 and 150.

In addition, Table 3 shows a total track length (TTL), an effective focal length (EFL), a back focus length (BFL) and a focal length of the plurality of lenses 100 of the optical system 1000 according to the embodiment.

Referring to Table 1, the refractive indices of the first lens 110 and the second lens 120 may be the same. In addition, the refractive indices of the first lens 110 and the second lens 120 may be smaller than the refractive index of the third lens 130. In addition, the refractive indices of the fourth lens 140 and the fifth lens 150 may be greater than the refractive indices of the first lens 110 and the second lens 120, and may be less than the refractive indices of the third lens 130. The Abbe numbers of the first lens 110 and the second lens 120 may be the same. In addition, the Abbe numbers of the first lens 110 and the second lens 120 may be greater than the Abbe numbers of the third lens 130. In addition, the Abbe numbers of the fourth lens 140 and the fifth lens 150 may be smaller than the Abbe numbers of the first lens 110 and the second lens 120, and may be greater than the abbe number of the third lens 130.

Referring to Table 2, each of the surfaces S1, S2, S3, S4, S5, S6, S7, S8, S9, and S10 of the first to fifth lenses 110, 120, 130, 140, and 150 may have a set of a clear aperture. In detail, in the optical system 1000, the maximum size CA of the clear aperture of the second surface S2 may be greater than the maximum size CA of the clear aperture of the first surface S1, and the maximum size CA of the clear aperture of the first surface S1 may be greater than the maximum size CA of the clear aperture of the third surface S3.

Also, the clear height CH of the first surface S1, the second surface S2, and the third surface S3 may be the same as each other. At this time, the size CH (clear height) of the minimum clear aperture of the first to third surfaces S1, S2, S3 may be larger than the maximum clear aperture CA of the fourth to tenth surfaces S4, S5, S6, S7, S8, S9, and S10.

Referring to Table 3, the effective focal length EFL of the optical system 1000 may be smaller than the focal length f1 of the first lens 110. Also, the effective focal length EFL of the optical system 1000 may be greater than the focal length f2 of the second lens 120. In addition, the focal length f1 of the first lens 110 among the first to fifth lenses 110, 120, 130, 140 and 150 may be the largest.

[Table 4]

|  | Equation | Embodiment |
|---|---|---|
| Equation 1 | 0.9 < L1S1_CA / L1S2_CA < 1 | 0.995 |
| Equation 2 | 1 < L1S1_CA / L2S1_ CA < 1.2 | 1.054 |
| Equation 3 | 1 <L1S1_CA/L2S2_CA< 1.35 | 1.258 |
| Equation 4 | 7 < EFL < 40 | 11.081 |
| Equation 5 | 6.5 < L1R1 / L1R2 < 8.5 | 7.631 |
| Equation 6 | \|-20 < L1R1 / L2R1 < -15 | -19.053 |
| Equation 7 | \|-3 < L1R2 / L2R1 < -1 | -2.497 |
| Equation 8 | 0.1 < L1R1 / L3R1 < 0.8 | 0.157 |
| Equation 9 | \|-130 < L3R1 / L2R1 < -110 | -121.372 |
| Equation 10 | 0.1 < L1_CT / L2_CT < 0.75 | 0.423 |
| Equation 11 | 0.5 < L1_CT / L3_CT < 0.9 | 0.665 |
| Equation 12 | 0.1 < d12 / d23 < 0.4 | 0.178 |
| Equation 13 | 20 < d34 / d12 < 30 | 23.000 |

(continued)

|  | | Equation | Embodiment |
|---|---|---|---|
| Equation 14 | | 3.5 < d34 / d23 < 7 | 4.090 |
| Equation 15 | | 0.5 < d34 / d45 < 2 | 1.095 |
| Equation 16 | | 5 < L1_CT / d12 < 15 | 10.988 |
| Equation 17 | | 20 < L2_CT / d12 < 30 | 26.000 |
| Equation 18 | | 1 < f 1 / f2 < 2 | 1.683 |
| Equation 19 | | 1 < f1 / TTL < 1.8 | 1.378 |
| Equation 20 | | 0.5 < f2 / TTL < 1.2 | 0.819 |
| Equation 21 | | 1 < TTL / bf2 < 1.2 | 1.058 |
| Equation 22 | | 0.52 < L1S1_CH/L1S1_CA < 0.98 | 0.821 |
| Equation 23 | | 0.52 < L1S2_CH / L1S2_CA < 0.98 | 0.816 |
| Equation 24 | | 0.52 < L2S1_CH / L2S1_CA < 0.98 | 0.865 |
| Equation 25 | | L1S2_CA > L1S1_CA > L2S1_CA | Satisfaction |
| Equation 26 | | L1S1_CH = L1S2_CH = L2S1_CH | Satisfaction |
| Equation 27 | | 1.4 < n1d < 1.6 | 1.537 |
| Equation 28 | | 1.4 < n2d < 1.6 | 1.537 |
| Equation 29 | | 40 < V1d <80 | 55.676 |
| Equation 30 | | 40 < V2d <80 | 55.676 |
| Equation 31 | | F# < 3 | 2.841 |
| Equation 32 | | 4 < TTL / ImgH < 6.5 | 5.363 |
| Equation 33 | | 1 < BFL /ImgH < 3.5 | 2.291 |
| Equation 34 | | 1.5 < TTL / BFL < 3.5 | 2.341 |
| Equation 35 | | 1 < EFL / TTL < 1.5 | 1.007 |
| Equation 36 | | 2 < EFL / BFL < 3 | 2.359 |
| Equation 37 | | 2 < EFL / EPD < 4 | 2.841 |

Table 4 shows the result values of the optical system 1000 according to the embodiment with respect to the above-described equations. Referring to Table 4, it may be seen that the optical system 1000 according to the embodiment satisfies at least one of Equations 1 to 37. In detail, it may be seen that the optical system 1000 satisfies all of Equations 1 to 37.

Accordingly, the optical system 1000 according to the embodiment may have the optical characteristics shown in FIGS. 4 to 7. In detail, FIG. 4 is a graph of the aberration diagram of the optical system 1000 according to the embodiment, and this is graph measuring longitudinal spherical aberration, astigmatic field curves, and distortion aberration from left to right. In FIG. 4, the X-axis may indicate a focal length (mm) and distortion aberration (%), and the Y-axis may indicate the height of an image side. In addition, the graph for spherical aberration is a graph for light in a wavelength band of about 435 nm, about 486 nm, about 546 nm, about 587 nm, and about 656 nm, and the graph for astigmatism and distortion aberration is a graph for light in the wavelength band of 546 nm.

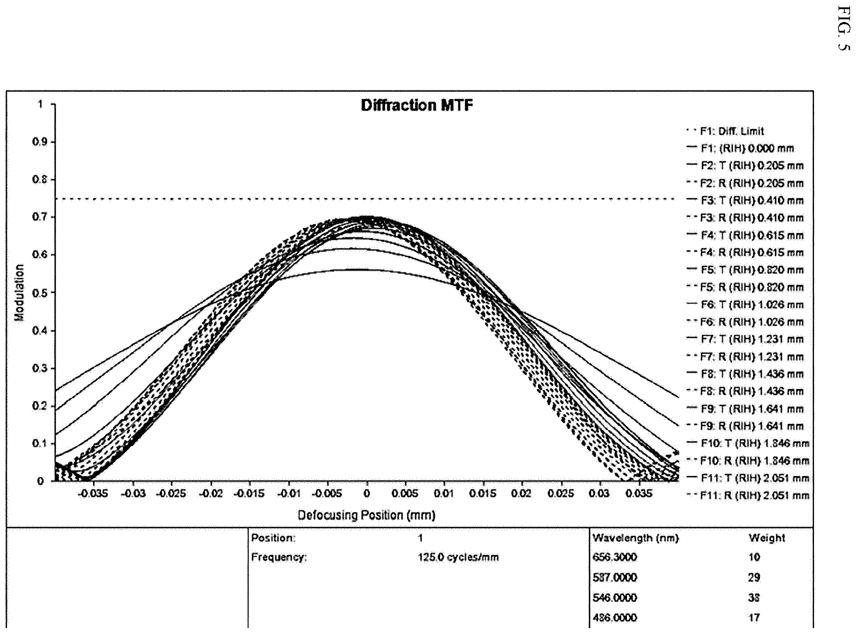

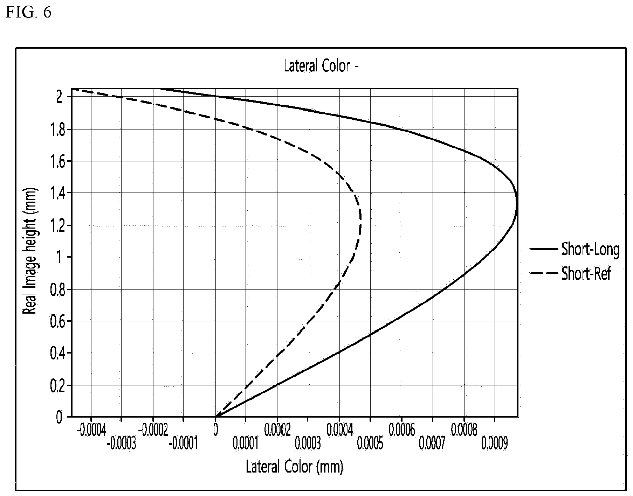

FIG. 5 is a graph showing diffraction MTF characteristics according to a lens position in the optical system 1000 according to the embodiment, and FIG. 6 is an aberration diagram showing chromatic aberration of the optical system 1000 according to the embodiment.

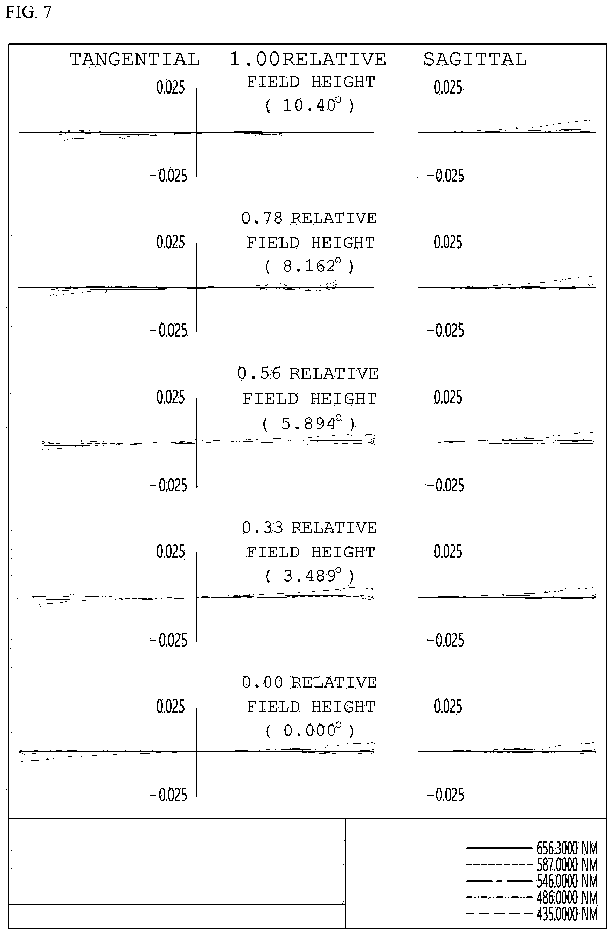

FIG. 7 is a graph of coma aberration of the optical system 1000 according to the embodiment, and this is a graph measuring the aberration of the tangential component and the sagittal component of light in wavelength bands of about 435 nm, about 486 nm, about 546 nm, about 587 nm, and about 656 nm depending on the field height of the image side. The interpretation of the coma-aberration graph may be interpreted that the closer the X-axis on the positive and negative axes, the better the coma-aberration correction function. That is, the optical system 1000 according to the embodiment may have improved optical properties. In detail, the optical system 1000 may include at least one lens surface having a larger clear aperture than the first surface S 1 of the first lens 110 and may have improved optical characteristics. In detail, referring to FIGS. 4 to 7, it may be seen that the optical system 1000 has excellent aberration characteristics, and since the measured values appear adjacent to the X-axis in almost all fields as shown in FIG. 7, it may be seen that has an excellent coma-aberration correction function.

In addition, at least one lens in the optical system 1000 may have a non-circular shape, for example, a D-cut shape. Accordingly, the optical system 1000 may be implemented in a small size, has improved optical performance, and may be provided more compactly than an optical system having only a circular shape. Also, the optical system 1000 may include a plurality of lenses and a light path changing member (not shown). Accordingly, the optical system 1000 may be applied to a folded camera that may have a thinner thickness, and a device including the camera may be manufactured with a thin thickness.

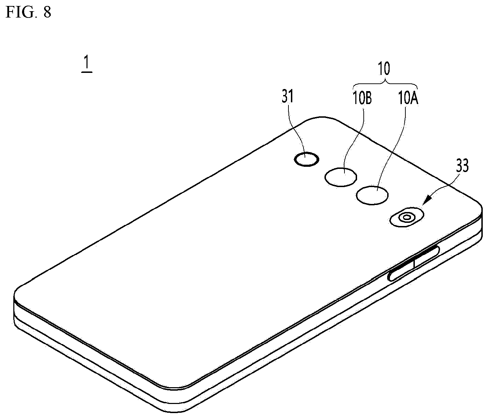

FIG. 8 is a diagram illustrating that the camera module according to the embodiment is applied to a mobile terminal.

Referring to FIG. 8, the mobile terminal 1 may include a camera module 10 provided on the rear side. The camera module 10 may include an image capturing function. In addition, the camera module 10 may include at least one of an auto focus function, a zoom function, and an OIS function. The camera module 10 may process a still video image or an image frame of a moving image obtained by the image sensor 300 in a shooting mode or a video call mode. The processed image frame may be displayed on a display unit (not shown) of the mobile terminal 1 and may be stored in a memory (not shown). In addition, although not shown in the drawings, the camera module may be further disposed on the front of the mobile terminal 1. For example, the camera module 10 may include a first camera module 10A and a second camera module 10B. In this case, at least one of the first camera module 10A and the second camera module 10B may include the above-described optical system 1000. Accordingly, the camera module 10 may have improved optical characteristics and may have a slim structure. In addition, the mobile terminal 1 may further include an autofocus device 31. The auto focus device 31 may include an auto focus function using a laser. The auto focus device 31 may be mainly used in a condition in which the auto focus function using the image of the camera module 10 is deteriorated, for example, in proximity of 10 m or less or in a dark environment. The autofocus device 31 may include a light emitting unit including a vertical cavity surface emission laser (VCSEL) semiconductor device and a light receiving unit that converts light energy such as a photodiode into electrical energy. Also, the mobile terminal 1 may further include a flash module 33. The flash module 33 may include a light emitting device emitting light therein. The flash module 33 may be operated by a camera operation of a mobile terminal or a user's control.

Features, structures, effects, etc. described in the above embodiments are included in at least one embodiment of the invention, and are not necessarily limited to only one embodiment. Furthermore, features, structures, effects, etc. illustrated in each embodiment can be combined or modified for other embodiments by those of ordinary skill in the art to which the embodiments belong. Accordingly, the contents related to such combinations and modifications should be interpreted as being included in the scope of the invention. In addition, although the embodiment has been described above, it is only an example and does not limit the invention, and those of ordinary skill in the art to which the invention pertains are exemplified above in a range that does not depart from the essential characteristics of the present embodiment. It can be seen that various modifications and applications that have not been made are possible. For example, each component specifically shown in the embodiment can be implemented by modification. And differences related to such modifications and applications should be construed as being included in the scope of the invention defined in the appended claims.

**Claims**

1.   An optical system comprising:
     first to fifth lenses sequentially arranged along an optical axis from an object side to an image side,

         wherein the first lens has a positive refractive power,
         wherein the second lens has a positive refractive power,
         wherein each of the first to fifth lenses includes an object-side surface and an image-side surface,
         wherein at least one of the image-side surface of the first lens, and the object-side surfaces and the image-side surfaces of the second to fifth lenses has a larger clear aperture than a clear aperture of the object-side surface of the first lens.

2.   The optical system of claim 1,
     wherein a size of the clear aperture of the image-side surface of the first lens is larger than a size of the clear aperture of the object-side surface of the first lens.

3. The optical system of claim 2,
wherein the object-side surface of the first lens is concave.

4. The optical system of claim 3,
wherein the first lens satisfies the following Equation:

[Equation 1]

$$0.95 < L1S1\_CA / L1S2\_CA < 1$$

(In Equation 1, L1S1_CA means the size of the clear aperture (CA) of the object side of the first lens, and L1S2_CA means the size of the effective aperture (CA) of the image side of the first lens).

5. The optical system of claim 1,
wherein an effective focal length of the optical system satisfies the following Equation 2:

[Equation 2]

$$7 < EFL < 40$$

(In Equation 2, EFL means the effective focal length of the optical system).

6. The optical system of claim 1,
wherein the first and second lenses satisfies the following Equation 3:

[Equation 3]

$$0.1 < L1\_CT / L2\_CT < 0.75$$

(In Equation 3, L1_CT means a center thickness of the first lens, and L2_CT means a center thickness of the second lens).

7. The optical system of any one of claims 1 to 6,
wherein F-number of the optical system is less than 3.

8. The optical system of claim 7, further comprising:

a light path changing member disposed between the object and the first to fifth lenses,
wherein the light path changing member changes a path of a light incident on the light path changing member in a first direction to a second direction that is an arrangement direction of the first to fifth lenses.

9. An optical system comprising:

first to fifth lenses sequentially arranged along an optical axis from an object side to an image side,
wherein the first lens has a positive refractive power,
wherein the second lens has a positive refractive power,
wherein the first lens has a meniscus shape convex toward the image side,
wherein the object-side surface of the second lens is convex,
wherein at least one among the first to fifth lenses has a non-circular shape.

10. The optical system of claim 9,

wherein each of the first to fifth lenses includes an object-side surface and an image-side surface,
wherein at least one of the image-side surface of the first lens, and the object-side surfaces and the image-side surfaces of the second to fifth lenses has a larger clear aperture than a clear aperture of the object-side surface of the first lens.

11. The optical system of claim 10,
    wherein the object-side surface of the first lens has a non-circular shape, and the following Equation 4 satisfies:

$$[\text{Equation 4}]$$

$$0.52 < L1S1\_CH / L1S1\_CA < 0.98$$

(In Equation 4, L1S1_CA means a maximum clear aperture of the first lens, and L1S1_CH means a minimum clear height of the clear aperture of the first lens according to the non-circular shape).

12. The optical system of claim 11,
    wherein the image-side surface of the first lens and the object-side surface of the second lens have a non-circular shape.

FIG. 1

FIG. 2

FIG. 3

FIG. 4

FIG. 5

FIG. 6

FIG. 7

| TANGENTIAL | 1.00 RELATIVE FIELD HEIGHT ( 10.40° ) | SAGITTAL |

656.3000 NM
587.0000 NM
546.0000 NM
486.0000 NM
435.0000 NM

FIG. 8

**EP 4 261 589 A1**

## INTERNATIONAL SEARCH REPORT

| | International application No. |
|---|---|
| | **PCT/KR2021/018768** |

**A. CLASSIFICATION OF SUBJECT MATTER**

**G02B 13/00**(2006.01)i; **G02B 9/60**(2006.01)i; **G02B 3/00**(2006.01)i; **G03B 17/12**(2006.01)i; **H04N 5/225**(2006.01)i

According to International Patent Classification (IPC) or to both national classification and IPC

**B. FIELDS SEARCHED**

Minimum documentation searched (classification system followed by classification symbols)

G02B 13/00(2006.01); G02B 11/32(2006.01); G02B 13/02(2006.01); G02B 13/18(2006.01); G02B 9/62(2006.01); H04N 5/372(2011.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 제5렌즈(5th lens), 유효경(clear aperture), 초점 거리(focal length), 비원형 (noncircular)

**C. DOCUMENTS CONSIDERED TO BE RELEVANT**

| Category* | Citation of document, with indication, where appropriate, of the relevant passages | Relevant to claim No. |
|---|---|---|
| X | JP WO2013-137312 A1 (KONICA MINOLTA INC.) 03 August 2015 (2015-08-03)<br>See paragraphs [0177]-[0181], table 16 and figure 14. | 1,2,7 |
| Y | | 8 |
| A | | 3-6,9-12 |
| X | JP 2015-072404 A (KONICA MINOLTA INC.) 16 April 2015 (2015-04-16)<br>See paragraphs [0077]-[0079], table 1 and figure 5. | 1,6,7 |
| Y | | 8-10 |
| Y | KR 10-2020-0031512 A (SAMSUNG ELECTRO-MECHANICS CO., LTD.) 24 March 2020 (2020-03-24)<br>See paragraphs [0109]-[0111] and [0221] and figures 1-3 and 22. | 8-10 |

☑ Further documents are listed in the continuation of Box C.  ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **08 April 2022** | **08 April 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

## INTERNATIONAL SEARCH REPORT

International application No.

**PCT/KR2021/018768**

**C.     DOCUMENTS CONSIDERED TO BE RELEVANT**

| Category* | Citation of document, with indication, where appropriate, of the relevant passages | Relevant to claim No. |
|---|---|---|
| A | KR 10-1123776 B1 (DAI WON OPTICAL CO., LTD.) 16 March 2012 (2012-03-16)<br>See claim 1 and figure 5. | 1-12 |
| A | KR 10-2018-0015487 A (KOLEN CO., LTD.) 13 February 2018 (2018-02-13)<br>See claim 1 and figure 1. | 1-12 |

Form PCT/ISA/210 (second sheet) (July 2019)

**INTERNATIONAL SEARCH REPORT**
Information on patent family members

International application No.

**PCT/KR2021/018768**

| Patent document cited in search report | | | Publication date (day/month/year) | Patent family member(s) | | | Publication date (day/month/year) |
|---|---|---|---|---|---|---|---|
| JP | WO2013-137312 | A1 | 03 August 2015 | TW | 201400851 | A | 01 January 2014 |
| | | | | TW | I476434 | B | 11 March 2015 |
| | | | | WO | 2013-137312 | A1 | 19 September 2013 |
| JP | 2015-072404 | A | 16 April 2015 | | None | | |
| KR | 10-2020-0031512 | A | 24 March 2020 | CN | 110908071 | A | 24 March 2020 |
| | | | | CN | 211206929 | U | 07 August 2020 |
| | | | | TW | 202024713 | A | 01 July 2020 |
| | | | | TW | I739144 | B | 11 September 2021 |
| | | | | US | 2020-0088972 | A1 | 19 March 2020 |
| KR | 10-1123776 | B1 | 16 March 2012 | | None | | |
| KR | 10-2018-0015487 | A | 13 February 2018 | CN | 107688223 | A | 13 February 2018 |
| | | | | US | 2018-0039046 | A1 | 08 February 2018 |

Form PCT/ISA/210 (patent family annex) (July 2019)